# NEW EUROPEAN PATENT SPECIFICATION

(11) **EP 3 112 062 B2**
(45) Date of publication and mention of the opposition decision: **05.08.2026**
(45) Mention of the grant of the patent: 21.06.2023
(21) Application number: 15174654.2
(22) Date of filing: 30.06.2015
(51) Int. Cl.: B33Y 80/00

(54) **A CUTTING TOOL**
SCHNEIDWERKZEUG
OUTIL DE COUPE

(43) Date of publication of application: 04.01.2017
(73) Proprietor: Seco Tools AB, 737 82 Fagersta (SE)
(72) Inventor: THURESSON, Jonas, 73733 Fagersta (SE); LARSSON, Andreas.J, SE-732 47 Arboga (SE); THELIN, Jimmy, 737 91 Fagersta (SE); JONSSON, Mats, SE 776 92 Hedemora (SE)
(74) Representative: WSL Patentanwälte Partnerschaft mbB

(56) References cited:
- WO-A1-96/20650
- DE-A1- 102004 032 093
- DE-A1- 102007 033 167
- US-A- 4 640 652
- US-A- 4 848 198
- US-A1- 2007 257 544
- US-A1- 2011 305 531
- US-A1- 2012 163 931
- US-A1- 2013 220 089
- US-A1- 2014 321 931

## Description

### FIELD OF THE INVENTION

The present invention relates to a cutting tool arranged for metal chip removing machining and, more particularly, to such cutting tools having cool-ant flow channels.

### BACKGROUND AND SUMMARY

It is advantageous to deliver a coolant closely to a cutting area, using a cutting tool having a coolant supply, directing a coolant to a cutting edge of the cutting insert for minimizing the heat accumulated due to the interaction of a cutting insert with a machined workpiece. Conventional techniques for providing lubrication and/or coolant to cutting edges of cutting inserts typically involve introducing the coolant via openings in a toolholder for the cutting insert, or via spray nozzles directed at the cutting edges such as US 4,848,198. Some cutting inserts include channels formed in the cutting inserts that are in flow communication with and facilitate introduction of coolant from channels provided in the toolholder body. The provision of these coolant flow channels in the cutting inserts tends to substantially complicate manufacture of the cutting inserts, and the channels can weaken the cutting insert. It is desirable to provide a cutting tool that facilitate introduction of coolant to the cutting edges of the cutting insert that minimizes manufacturing complexity. It is also desirable to provide a cutting tool and a nozzle that facilitate introduction of coolant to the cutting edge without substantially interfering with the strength of the cutting insert. WO9620650 discloses a drill bushing for use in osteosynthesis. US 2013/220089 A1 discloses a cutting tool provided with an internal fluid delivery system comprising a fluid delivery head where the fluid path coincides with a through bore for a fastening element in the fluid delivery head.

### SUMMARY OF THE INVENTION

According to the present invention a cutting tool according to claim 1 is provided.

According to the present invention, a cutting tool for metal chip removing machining is provided, wherein the cutting tool has a holder body, a cutting insert and a nozzle as described above.

According to the present invention, the direction of the grooves coincides with the flow direction at least along half of the length of the at least one internal coolant channel to reduce obstruction of the flow of coolant.

According to another aspect of the present invention, the the grooves coincide with the flow direction along at least 80% of the length of the at least one internal coolant channel to further reduce obstruction of the flow of coolant.

According to another aspect of the present invention, a size of the groove is in the range of 0.1 to 30 micrometers.

According to another aspect of the present invention, the at least one internal coolant channel has a changing cross-section to divide the volumetric flow of the coolant.

According to another aspect of the present invention, the at least one internal coolant channel has a diameter, in the range of 0.1 mm to 8 mm.

According to another aspect of the present invention, the size of the second opening of the at least one internal coolant channel defines the smallest diameter of the at least one internal coolant channel such to increase coolant speed.

According to another aspect of the present invention, the nozzle is a removable nozzle for turning applications where coolant cools the cutting insert and the cutting tool comprises means to coolant-tightly seal the nozzle relative to the holder body to avoid leakage of coolant.

According to another aspect of the present invention, the at least one internal coolant channel follows a smooth path without sudden directional changes thereby enhancing coolant flow.

According to another aspect of the present invention, there are two internal coolant channels extending at opposite sides of the single through hole thereby facilitating increase in coolant flow while keeping the nozzle sturdy.

According to another aspect of the present invention, the first opening is situated between the single through hole and the rear end to make more space for fastening means.

According to another aspect of the present invention, the bottom face of the nozzle comprises a guide device such as a projection or recess adjacent to the forward end to set the direction of the nozzle by having the guide device cooperating with a recess or projection on the cutting insert or a clamping means.

According to another aspect of the present invention, the nozzle is a one-piece unit made through additive manufacturing, such that it has no plugged holes.

According to another aspect of the present invention, a single fastening member or screw secures both the cutting insert and the nozzle.

### BRIEF DESCRIPTION OF THE DRAWINGS

The features and advantages of the present invention are well understood by reading the following detailed description in conjunction with the drawings in which like numerals indicate similar elements and in which:

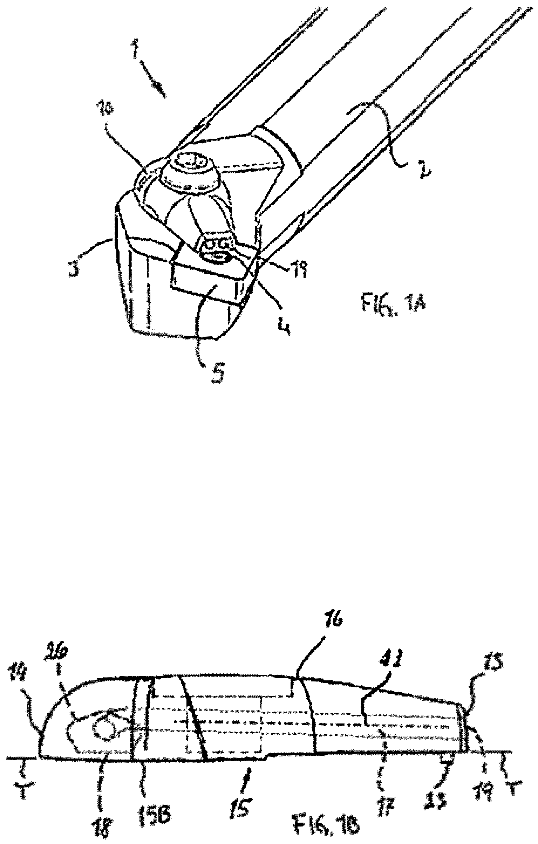

FIG. 1A is a perspective view of a cutting tool according to an aspect of the present invention;
FIG. 1B is a side view of a nozzle of the cutting tool in Fig. 1A;

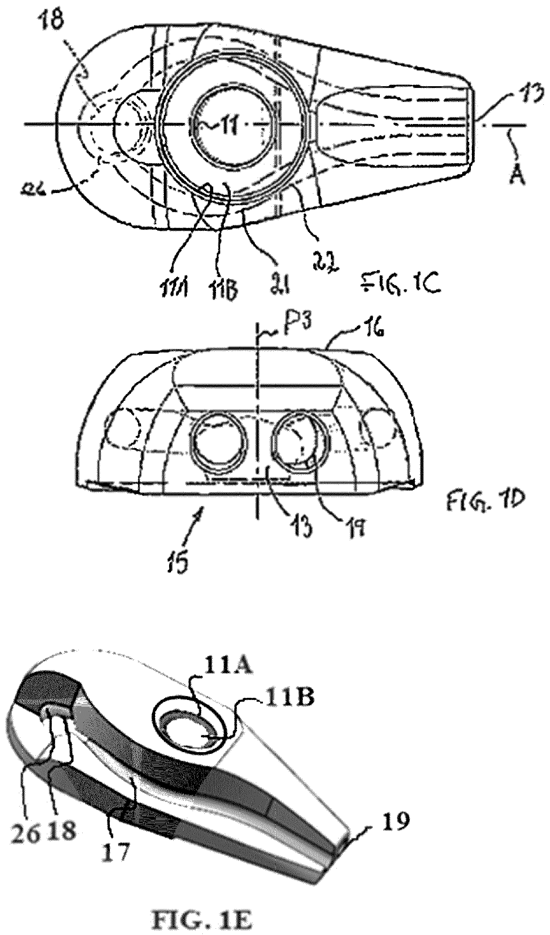

FIG. 1C is a top view of the nozzle;
FIG. 1D is a front view of the nozzle;
FIG. 1E is a perspective front view of the nozzle, partially in section;

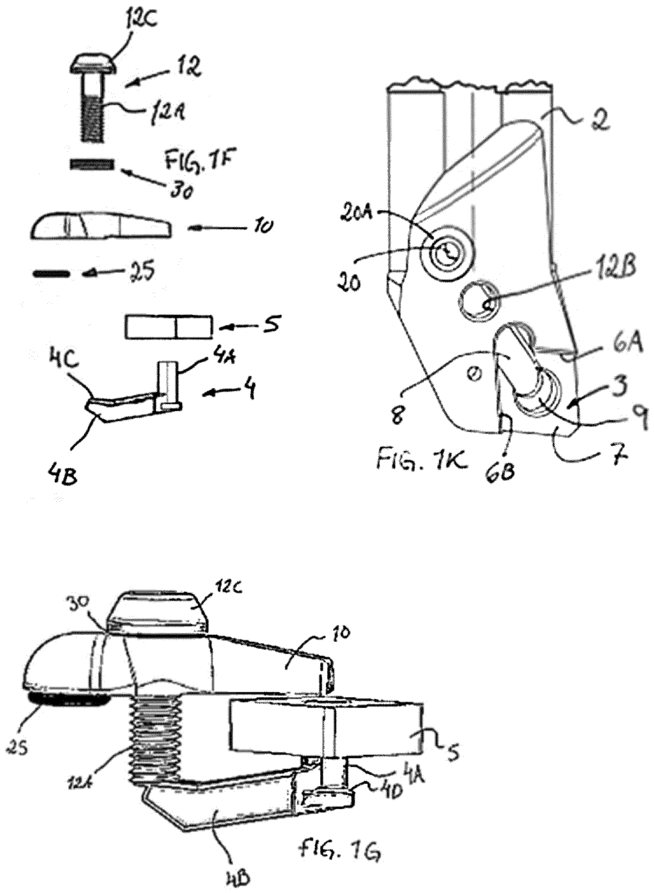

FIG. 1F is an exploded side view of components including the nozzle of Figs. 1B-1E of the cutting tool according to an aspect of the present invention;
FIG. 1G is a side view of the components;

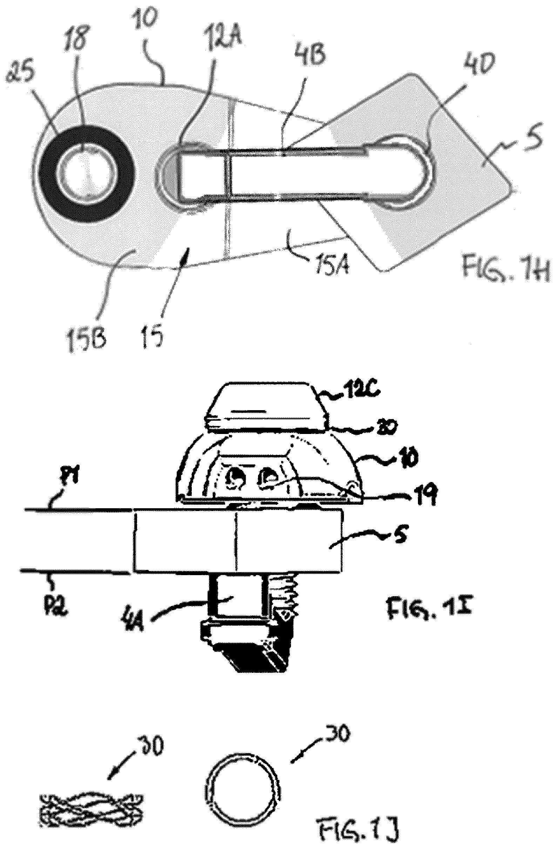

FIG. 1H is a bottom view of the components;
FIG. 1I is a front view of the components;
FIG. 1J is a side view and top view of a spring included in the components;
FIG. 1K is a top view of a holder body of the cutting tool in Fig. 1A;

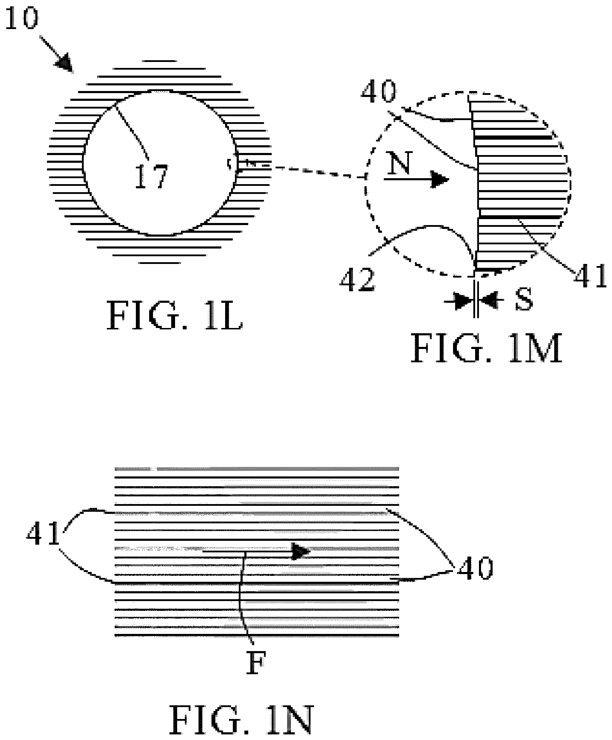

FIG. 1L is a cross-sectional view of a channel in the nozzle;
FIG. 1M is an enlarged view of the cross-section view in FIG. 1L; and
FIG. 1N is an side view according to the arrow N in FIG. 1M,
The figures 1B, 1C, and 1D have been depicted by at least partly transparent illustrations for ease of understanding. It is however understood that the tools themselves are not transparent.

### DETAILED DESCRIPTION

Reference is made to FIGS. 1A-1N showing a cutting tool 1 comprising a nozzle 10 in accordance with the present invention. The shown cutting tool 1 may be a turning tool for internal metal machining and comprises a holder body 2 having a pocket 3, a clamping means in the shape of a locking member 4 and an inducer or nozzle 10. The pocket 3 is conventional and may have a bottom surface 7 and two upstanding walls 6A and 6B. The bot-tom surface 7 may have a recess 8 to accommodate the locking member 4. The bottom surface may be provided with a removable shim, not shown. The recess 8 is key lock shaped in top view, e.g. a combination of a circle and a rectangle, and may have a ledge 9 below about a center of the bottom surface 7. The indexable cutting insert 5 is clamped in the pocket by means of an L-shaped locking member 4 projecting into a hole of the cutting insert. In the illustrated embodiment, the cutting insert and pocket are generally diamond in shape but may have other shapes. The L-shaped locking member urges the converging sides of the cutting insert 5 against upstanding walls 6A and 6B, which are of substantially complementary shape to the sides of the cutting insert. The locking member forms one leg 4B of an L-shape pivotally arranged in the recess 8 in the holder 2, the other leg 4A of which member extends through a hole of the cutting insert 5. The locking member may have a rim 4D which rests upon the ledge 9 in the recess 8. Actuating means or fastening means 12 is provided to move the leg 4B downwardly and by this cause a pivoting action of the locking member around an axis and about a fulcrum point of the rim 4D and the ledge 9. The said axis forms substantially a right angle with the direction in which the leg 4B extends. In the illustrated embodiment, the means 12 is in the form of a screw 12A threadably engaged in a hole 12B in the holder 2. The screw 12A may have a single threaded end portion and may have an end portion arranged to engage the free end 4C of the leg 4B of the L-shaped locking member 4, when the screw 12A is turned, to cause said pivoting action of the locking member around the fulcrum point formed in the holder 2. The leg 4A passes through the recess 8 in the holder, the opening being shaped and dimensioned so as not to impede desired pivotal movement of the legs. The locking member leg 4A extends into a central hole in the cutting insert and serves to detachably secure the cutting insert in the pocket 3. The pivotal movement of the leg 4A causes the cutting insert 5 to move towards the walls 6A and 6B and be clamped thereto.

The screw 12A may extend along a hole 12B in the holder body 2. The screw is intersected by upper (P1) and lower (P2) imaginary planes of the cutting insert. The planes P1 and P2 may be parallel and each plane may touch at least two, preferably three or four, corner portions of the upper and lower surface of the cutting insert, respectively. The nozzle 10 exhibits mirror symmetry about a first plane P3 containing a longitudinal axis A of the nozzle as can be seen, for example, in FIG. 1D. The nozzle may be a one-piece unit. The nozzle includes a forward end 13, a rear end 14 and a bottom face 15. The bottom face 15 comprises a first surface 15A and a second surface 15B, the first surface being generally recessed relative to the second surface. A single through hole 11 extends between the bottom face 15 or the second surface 15B and an opposite top face 16. The single through hole 11 may be surrounded by an enlarged cavity 11A at the top face 16. At least one internal coolant channel 17 is provided in the nozzle that extends from a first opening 18 to a second opening 19, and is preferably not having any strength reducing or plugged holes such as stop screws in holes. The at least one internal coolant channel has a length. The first opening 18 is connectable to the coolant supply conduit 20 in the holder body. The first opening 18 is located at the second surface 15B of the bottom face 15. The second surface 15B projects such that a tangent **T** to the first surface 15A facing the cutting insert 5, and perpendicular to a through hole axis intersects the first opening or the channel 17. The first opening 18 is positioned between the through hole 11 and the rear end 13 and may comprise a chamber 26 in flow communication with the second opening 19. The second opening 19 serves as exit for the coolant at the forward end 13. The at least one coolant channel 17 and the first opening 18 are spaced from, i.e. not in contact with the through hole 11. The at least one coolant channel 17 may follow a smooth path without sudden directional changes such that coolant flow is not obstructed. At least a first portion 21 of the coolant channel 17 transits mathematically smooth or continuous into a second portion 22 of the coolant channel. The first and second portions of the coolant channel are designed such that first derivatives thereof are continuous if their lower peripheries are seen as mathematical curves for example as in the top view of Fig. 1C. Thereby, there will be reduced risk for oil traps when using oil mist as coolant.

The nozzle 10 can be held to the holder body by the fastening member 12, preferably by the screw 12A. The single through hole 11 receives the fastening member 12 carrying a spring 30 and that is threadedly secured to a hole 12B in the holder body. The cavity 11A bottom 11B is intended to serve as a seat for the spring 30, such as a multiwave compression spring of for example stainless steel. Multiwave compression springs may be used in applications where space problems in length preclude the option of using a normal compression spring. The spring 30 is more closely shown in FIG. 1J. Other spring means can be used such as rubber washers. The nozzle does not have a front projection to engage a wall of the through hole of the cutting insert. The coolant is led through conduits passing through the holder body and requires connecting passageways and a deformable seal to lead the coolant to a discharge exit 19.

The fastening member 12 may have a head 12C which has an underside that can act on the spring 30 and urge the nozzle towards the holder. A seal element 25, such as an O-ring may be secured to or be loosely held by the nozzle or be secured to or be loosely held by a concave cavity 20A surrounding the conduit 20 opening in the holder body 2. The seal element 25 may be compressed between the nozzle and the holder body during the tightening of the fastening member to coolant-tightly seal the conduit 20 opening.

At mounting of the cutting insert 5 to the holder body 2 the locking member 4 sits in the recess 8 by interaction of the rim 4D and the ledge 9 in a conventional manner. The screw 12A is passed through the spring means 30 and the nozzle hole 11 and threaded through the hole 12B in the holder body 2. Suitably, the nozzle is rotated about the screw 12 to a position where it does not interfere with the space needed to mount the cutting insert. The end of the screw 12A will abut against the leg 4B and thereby cause pivotal movement of the leg 4A. If a cutting insert 5 is mounted in the pocket 3 the leg 4A will urge the cutting insert in direction towards the upstanding walls 6A and 6B. The nozzle is rotated about the screw into desired position when the cutting insert has been mounted. The screw head 12C will act on the spring means 30 and force the nozzle in direction towards the holder body. By choosing the correct elasticity property for the spring means 30 and the correct direction of the nozzle, the nozzle will become clamped against the holder body via the interaction of the seal 25 and the concave cavity 20A. The nozzle first surface 15A is spaced from, i.e. not in contact with the cutting insert 5 in assembled state. The holder body and/or the nozzle may be provided with means to guide the nozzle to a desired direction, such as protrusions acting peripherally on the nozzle or at least one protrusion acting in the forward end of the nozzle acting centrally on the cutting insert. The nozzle in this embodiment is not meant to clamp on the cutting insert but can do so if for example a thicker O-ring is used instead of the O-ring 25 shown. In the latter case the nozzle will tilt about an axis perpendicular to the length axis A and the forward end thereof will contact the cutting insert.

The bottom face 15 of the nozzle may comprise a guide device 23, such as a projection or recess, close to or at the forward end 13 to direct the nozzle and thereby direct a coolant jet by having the guide device releasably cooperating with a recess or projection on a cutting insert or at a clamping means such as the locking member 4. The projection 23 may be part of the forward end 13 or spaced from it by a distance that is less than a half length of the nozzle. Preferably the projection is formed close to the forward end like in for example FIG. 1B for best guidance of the coolant.

The nozzle 10 can be produced by a process from the group of the rapid prototyping processes. The nozzle may be made through additive manufacturing such as metal 3D printing processes which use binders, or fully dense metal processes like selective laser sintering (SLS) or direct metal laser sintering (DMLS). The latter technology uses a high power laser to fuse small particles of metal powders into a nozzle that has the described three dimensional shape. A laser beam "draws" directly on the powder so that only selected portions of the powder are solidified. The powder is said to be "scanned" by the laser. The use of a laser in this manner allows layers of different shape to be easily and rapidly fused, enabling complex objects with intricate internal structures to be produced. The laser selectively fuses the powdered metal by scanning the cross-sections (or layers) generated by a three dimensional modeling program on the surface of a powder bed. After each cross-section is scanned, the powder bed is lowered by one layer thickness. Then a new layer of material is applied on top and the process is repeated until the nozzle is completed. The rapid prototyping process makes it possible to produce complex nozzles which may or may not require subsequent machining. FIGS. 1L, 1M and 1N schematically show the channel 17 made by a rapid prototyping process, wherein layers 40 have been stacked upon each other to produce the internal channel by fusing material around non-fused powder. The non-fused powder is removed when the nozzle is completed. The joint 41 between two adjacent layers produces a visible step or groove 42. The grooves extend internally at least partially along the coolant channel. The axial extensions of the grooves 42 are chosen to coincide with the flow direction **F** of the coolant or central axis of the channel 17 to a largest possible degree, i.e. a direction of the joints 41 or grooves 42 coincides along least at half of the length of the channel to reduce flow obstruction. The joints 41 coincide with the flow direction along at least 80% of the length of the channel, see exemplary line 41 in FIG. 1B. The size **S** of the groove 42 may vary in the range of 0.1 to 30 micrometers or be constant in the range of 0.1 to 30 micrometers. The size may depend on the resolution of the manufacturing equipment being used. By having grooves or steps aligned with the flow direction the flow of coolant will be unobstructed. The terms "coincide" or "aligned" here include that small deviations from the ideal path, such as about ±5 degrees, are acceptable.

In use the shown tool will be turning metal workpieces while coolant may flow in order through the holder body 2, the coolant supply conduit 20, the seal 30, the fluid channel 17 and from the exit 19 to at least one active cutting edge.

Stated another way, a single fastening member 12 or screw 12A secures both the cutting insert 5 and the nozzle 10.

Tool life generally increases with increase in coolant supply pressure. This can be attributed to the ability of the high-pressure coolant to lift the chip and gain access closer to the cutting interface. This action leads to a reduction of the seizure region, thus lowering the friction coefficient, which in turn results in reduction in cutting temperature and cutting forces. Preferably the pressure used in the discussed embodiments is above 30 bar, often above 100 bar coolant pressure.

The coolant channel 17 may have a diameter, for example in the range of 0.1 mm to 8 mm.

Thus the present invention provides a cutting tool comprising a nozzle which can be produced flexibly and with relatively complex structures in a simple and cost-effective process. The coolant channel may have a changing cross-section. With a changing cross-section, it is possible to divide the volumetric flow of the coolant in a desired manner between several different coolant channels in the nozzle. It is possible to reduce the size of the outlet opening 19 of the coolant channel 17 such to increase coolant speed. Thus, the size of the second opening 19 of the coolant channel 17 may define the smallest diameter of the coolant channel.

In some cases it can be beneficial to use this solution regarding the grooved coolant channel in milling cutters and drilling tools too.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person.

## Claims

1. A cutting tool (1) for metal chip removing machining, wherein the cutting tool (1) has a holder body (2), a cutting insert (5) and a nozzle (10) for introduction of coolant to a cutting edge of the cutting insert (5) for metal chip removing machining, said nozzle (10) having a single through hole (11) for a fastening member (12) and having at least one internal coolant channel (17) for fluid having a flow direction (F), the at least one internal coolant channel (17) having a length, wherein the at least one internal coolant channel (17) comprises grooves (42) extending internally at least partially along the coolant channel (17), the at least one internal coolant channel (17) extending from a first opening (18) to a second opening (19;19';19"), said first opening (18) is connectable to a coolant supply conduit (20) in a holder body (2), said second opening (19;19';19") serving as exit for the coolant at the forward end (13), said nozzle (10) having a forward end (13), a rear end (14) and a bottom face (15), said single through hole (11) extending between the bottom face (15) and an opposite top face (16), **characterized in that** the at least one internal coolant channel (17) and the first opening (18) are spaced from the single through hole (11), wherein a direction of the grooves (42) coincides with the flow direction (F) at least along half of the length of the at least one internal coolant channel (17).

2. The cutting tool according to claim 1, wherein the grooves (42) coincide with the flow direction (F) along at least 80% of the length of the at least one internal coolant channel (17).

3. The cutting tool (1) according to claim 1 or 2, wherein a size (S) of the groove (42) is in the range of 0.1 to 30 micrometers.

4. The cutting tool (1) according to anyone of claims 1-3, wherein the at least one internal coolant channel (17) has a changing cross-section.

5. The cutting tool (1) according to anyone of claims 1- 4, wherein the at least one internal coolant channel (17) has a diameter, in the range of 0.1 mm to 8 mm.

6. The cutting tool (1) according to anyone of claims 1-5, wherein the size of the second opening (19) of the at least one internal coolant channel (17) defines the smallest diameter of the at least one internal coolant channel (17).

7. The cutting tool (1) according to anyone of claims 1 - 6, wherein the nozzle (10) is a removable nozzle for turning applications and wherein the cutting tool (1) comprises means (25) to coolant-tightly seal the nozzle (10) relative to the holder body (2).

8. The cutting tool (1) according to anyone of claims 1 - 7, wherein the at least one internal coolant channel (17) follows a smooth path without sudden directional changes.

9. The cutting tool (1) according to anyone of claims 1 - 8, wherein there are two internal coolant channels (17) extending at opposite sides of the single through hole (11).

10. The cutting tool (1) according to anyone of claims 1 - 9, wherein the first opening (18) is situated between the single through hole (11) and the rear end (14).

11. The cutting tool (1) according to anyone of claims 1 - 10, wherein the bottom face (15) of the nozzle (10) comprises a guide device (23) such as a projection or recess adjacent to the forward end (13) to set the direction of the nozzle (10) by having the guide device (23) cooperating with a recess or projection on the cutting insert (5) or a clamping means.

12. The cutting tool (1) according to anyone of claims 1 - 11, wherein the nozzle (10) is a one-piece unit made through additive manufacturing.

13. The cutting tool (1) according to anyone of claims 1 - 12, wherein a single fastening member (12) or screw (12A) secures both the cutting insert (5) and the nozzle (10).

## Patentansprüche

1. Schneidwerkzeug (1) für die metallspanabhebende Bearbeitung, wobei das Schneidwerkzeug (1) einen Halterkörper (2), einen Schneideinsatz (5) und eine Düse (10) zum Führen eines Kühlmittels zu einer Schneidkante des Schneideinsatzes (5) für die metallspanabhebende Bearbeitung aufweist, wobei die Düse (10) ein einzelnes Durchgangsloch (11) für ein Befestigungsmittel (12) aufweist und wenigstens einen inneren Kühlmittelkanal (17) für ein Fluid mit einer Flussrichtung (F) aufweist, wobei der wenigstens eine innere Kühlmittelkanal (17) eine Länge aufweist, wobei der wenigstens eine innere Kühlmittelkanal (17) Nuten (42) aufweist, die innen und wenigstens teilweise entlang des Kühlmittelkanals (17) verlaufen, wobei der wenigstens eine innere Kühlmittelkanal (17) sich von einer ersten Öffnung (18) zu einer zweiten Öffnung (19, 19', 19") erstreckt, wobei die erste Öffnung (18) mit einer Kühlmittelzuführleitung (20) in einem Halterkörper (2) verbindbar ist, wobei die zweite Öffnung (19, 19', 19") als ein Ausgang für das Kühlmittel an dem vorderen Ende (13) dient, wobei die Düse (10) ein vorderes Ende (13), ein hinteres Ende (14) und eine untere Seite (15) aufweist, wobei das einzelne Durchgangsloch (11) sich zwischen der unteren Seite (15) und einer gegenüberliegenden oberen Seite (16) erstreckt, **dadurch gekennzeichnet, dass** der wenigstens eine innere Kühlmittelkanal (17) und die erste Öffnung (18) von dem einzelnen Durchgangsloch (11) beabstandet sind, wobei eine Richtung der Nuten (42) mit der Flussrichtung (F) wenigstens über die Hälfte der Länge des wenigstens einen inneren Kühlmittelkanals (17) koinzidiert.

2. Schneidwerkzeug (1) nach Anspruch 1, wobei die Nuten (42) mit der Flussrichtung (F) über wenigstens 80% der Länge des wenigstens einen inneren Kühlmittelkanals (17) koinzidieren.

3. Schneidwerkzeug (1) nach Anspruch 1 oder 2, wobei eine Größe (S) der Nut (42) in dem Bereich von 0,1 bis 30 µm liegt.

4. Schneidwerkzeug (1) nach einem der Ansprüche 1 bis 3, wobei der wenigstens eine innere Kühlmittelkanal (17) einen sich verändernden Querschnitt aufweist.

5. Schneidwerkzeug (1) nach einem der Ansprüche 1 bis 4, wobei der wenigstens eine innere Kühlmittelkanal (17) einen Durchmesser in dem Bereich von 0,1 mm bis 8 mm aufweist.

6. Schneidwerkzeug (1) nach einem der Ansprüche 1 bis 5, wobei die Größe der zweiten Öffnung (19) des wenigstens einen inneren Kühlmittelkanals (17) den geringsten Durchmesser des wenigstens einen inneren Kühlmittelkanals (17) definiert.

7. Schneidwerkzeug (1) nach einem der Ansprüche 1 bis 6, wobei die Düse (10) eine entfernbare Düse für Drehanwendungen ist, und wobei das Schneidwerkzeug (1) Mittel (25) aufweist, um die Düse (10) bezogen auf den Halterkörper (2) Kühlmittel-dicht abzudichten.

8. Schneidwerkzeug (1) nach einem der Ansprüche 1 bis 7, wobei der wenigstens eine innere Kühlmittelkanal (17) einem gleichmäßigen Pfad ohne plötzliche Richtungswechsel folgt.

9. Schneidwerkzeug (1) nach einem der Ansprüche 1 bis 8, wobei es zwei innere Kühlmittelkanäle (17) gibt, die an gegenüberliegenden Seiten des einzelnen Durchgangslochs (11) verlaufen.

10. Schneidwerkzeug (1) nach einem der Ansprüche 1 bis 9, wobei die erste Öffnung (18) zwischen dem ersten Durchgangsloch (11) und dem hinteren Ende (14) angeordnet ist.

11. Schneidwerkzeug (1) nach einem der Ansprüche 1 bis 10, wobei die untere Seite (15) der Düse (10) eine Führungsvorrichtung (23) aufweist, wie z.B. einen Vorsprung oder eine Vertiefung, die zu dem vorderen Ende (13) benachbart ist, um die Richtung der Düse (10) dadurch festzulegen, dass die Führungsvorrichtung (23) mit einer Vertiefung oder einem Vorsprung auf dem Schneideinsatz (5) oder einem Einspannmittel zusammenwirkt.

12. Schneidwerkzeug (1) nach einem der Ansprüche 1 bis 11, wobei die Düse (10) eine einstückige Einheit ist, die durch ein additives Herstellungsverfahren hergestellt ist.

13. Schneidwerkzeug (1) nach einem der Ansprüche 1 bis 12, wobei ein einzelnes Befestigungsmittel (12) oder eine Schraube (12A) sowohl den Schneideinsatz (5) als auch die Düse (10) sichert.

## Revendications

1. Outil de coupe (1) destiné à un usinage par enlèvement de copeaux métalliques, où l'outil de coupe (1) présente un corps de support (2), une plaquette de coupe (5) et une buse (10) pour introduction de réfrigérant sur une arête de coupe de la plaquette de coupe (5) destinée à un usinage par enlèvement de copeaux métalliques, ladite buse (10) présentant un unique trou traversant (11) destiné à un élément de fixation (12) et présentant au moins un canal à réfrigérant interne (17) destiné à un fluide ayant un sens d'écoulement (F), le au moins un canal à réfrigérant interne (17) présentant une longueur, où le au moins un canal à réfrigérant interne (17) comprend des rainures (42) s'étendant de manière interne au moins en partie le long du canal à réfrigérant (17), le au moins un canal à réfrigérant interne (17) s'étendant depuis une première ouverture (18) jusqu'à une seconde ouverture ($19 ; 19' ; 19"), ladite première ouverture (18) peut être reliée à un conduit d'alimentation en réfrigérant (20) dans un corps de support (2), ladite seconde ouverture (19 ; 19' ; 19") servant de sortie pour le réfrigérant au niveau de l'extrémité avant (13), ladite buse (10) présentant une extrémité avant (13), une extrémité arrière (14) et une face inférieure (15), ledit unique trou traversant (11) s'étendant entre la face inférieure (15) et une face supérieure opposée (16), **caractérisé en ce que** le au moins un canal à réfrigérant interne (17) et la première ouverture (18) sont espacés de l'unique trou traversant (11), où une direction des rainures (42) coïncide avec le sens d'écoulement (F) sur au moins la moitié de la longueur du au moins un canal à réfrigérant interne (17).

2. Outil de coupe selon la revendication 1, où les rainures (42) coïncident avec le sens d'écoulement (F) sur au moins 80 % de la longueur du au moins un canal à réfrigérant interne (17).

3. Outil de coupe (1) selon la revendication 1 ou 2, où une taille (S) de la rainure (42) se situe dans la plage allant de 0,1 à 30 micromètres.

4. Outil de coupe (1) selon l'une quelconque des revendications 1 à 3, où le au moins un canal à réfrigérant interne (17) présente une section transversale qui varie.

5. Outil de coupe (1) selon l'une quelconque des revendications 1 à 4, où le au moins un canal à réfrigérant interne (17) présente un diamètre, dans la plage allant de 0,1 mm à 8 mm.

6. Outil de coupe (1) selon l'une quelconque des revendications 1 à 5, où la taille de la seconde ouverture (19) du au moins un canal à réfrigérant interne (17) définit le plus petit diamètre du au moins un canal à réfrigérant interne (17).

7. Outil de coupe (1) selon l'une quelconque des revendications 1 à 6, où la buse (10) est une buse amovible destinée à des applications de tournage et où l'outil de coupe (1) comprend un moyen (25) permettant d'assurer l'étanchéité au réfrigérant de la buse (10) par rapport au corps de support (2).

8. Outil de coupe (1) selon l'une quelconque des revendications 1 à 7, où le au moins un canal à réfrigérant interne (17) suit une trajectoire régulière sans changement directionnel brusque.

9. Outil de coupe (1) selon l'une quelconque des revendications 1 à 8, où il existe deux canaux à réfrigérant internes (17) s'étendant sur des côtés opposés de l'unique trou traversant (11).

10. Outil de coupe (1) selon l'une quelconque des revendications 1 à 9, où la première ouverture (18) est située entre l'unique trou traversant (11) et l'extrémité arrière (14).

11. Outil de coupe (1) selon l'une quelconque des revendications 1 à 10, où la face inférieure (15) de la buse (10) comprend un dispositif de guidage (23) tel qu'une saillie ou un évidement adjacent à l'extrémité avant (13) pour régler la direction de la buse (10) en faisant coopérer le dispositif de guidage (23) avec un évidement ou une saillie sur la plaquette de coupe (5) ou un moyen de serrage.

12. Outil de coupe (1) selon l'une quelconque des revendications 1 à 11, où la buse (10) est un élément unitaire produit par fabrication additive.

13. Outil de coupe (1) selon l'une quelconque des revendications 1 à 11, où un unique élément de fixation (12) ou une unique vis (12A) fixe à la fois la plaquette de coupe (5) et la buse (10).
